# EUROPEAN PATENT SPECIFICATION

(11) **EP 3 337 652 B1**
(45) Date of publication and mention of the grant of the patent: **11.11.2020**
(21) Application number: 16879895.7
(22) Date of filing: 14.12.2016
(51) Int. Cl.: B29C 64/118, B29C 31/04, B33Y 30/00, B33Y 50/00

(54) **ROTATION AND NOZZLE OPENING CONTROL OF EXTRUDERS IN PRINTING SYSTEMS**
ROTATIONS- UND DÜSENÖFFNUNGSSTEUERUNG VON EXTRUDERN IN DRUCKSYSTEMEN
COMMANDE DE ROTATION ET D'OUVERTURE DE BUSE D'EXTRUDEUSES DANS DES SYSTÈMES D'IMPRESSION

(30) Priority: 22.12.2015 US 201562271144 P; 13.01.2016 US 201614995082
(43) Date of publication of application: 27.06.2018
(73) Proprietor: Western Digital Technologies, Inc., San Jose, CA 95119 (US)
(72) Inventor: RYAN, Robert, P., Irvine, CA 92612 (US)
(74) Representative: Dehns
(86) International application number: PCT/US2016/066725
(87) International publication number: WO 2017/112493

(56) References cited:
- EP-A1- 2 886 277
- CN-A- 104 097 327
- CN-U- 204 354 488
- JP-B2- 5 445 674
- KR-B1- 101 528 850
- KR-B1- 101 575 061
- KR-B1- 101 575 061
- US-A1- 2015 035 198
- US-A1- 2015 352 792
- US-B1- 6 505 089

## Description

### BACKGROUND

### Technical Field

This disclosure relates to printing systems, and more particularly, to rotation and nozzle opening control of extruders in printing systems.

### Description of the Related Art

Printing systems, such as three-dimensional (3D) printing system, have a multitude of uses. For example, 3D printers can create a 3D object from a computer model. 3D printing has been used in the following industries: manufacturing, medical, aerospace and aviation, automotive, fashion, and food among others. The worldwide 3D printing industry is expected to grow from $3.07B in revenue in 2013 to $12.8B by 2018, and exceed $21B in worldwide revenue by 2020. Despite recent advances in 3D printing, commercially available 3D printers are slow and inefficient. KR101575061 describes a 3-D printer having a rotatable nozzle.

### BRIEF DESCRIPTION OF THE DRAWINGS

Systems and methods that embody the various features of the invention will now be described with reference to the following drawings, in which:
Fig. 1A illustrates a 3D printing system according to one embodiment of the invention.
Fig. 1B illustrates a 3D printing system according to another embodiment of the invention.
Fig. 2 illustrates extruder tips according to some embodiments of the invention.
Fig. 3 is a diagram of an extruder depositing material according to one embodiment of the invention.
Fig. 4 is a diagram of an extruder depositing material along paths that include corners according to some embodiments of the invention.
Fig. 5 is a flow diagram illustrating a process of generating a 3D object according to one embodiment of the invention.
Fig. 6 is a diagram illustrating generation of a 3D object according to one embodiment of the invention.
Fig. 7 is a flow diagram illustrating a process of generating a 3D object according to another embodiment of the invention.
Fig. 8 is a diagram illustrating generation of a 3D object according to another embodiment of the invention.

### DETAILED DESCRIPTION

While certain embodiments are described, these embodiments are presented by way of example only, and are not intended to limit the scope of protection. Indeed, the novel methods and systems described herein may be embodied in a variety of other forms. Furthermore, various omissions, substitutions, and changes in the form of the methods and systems described herein may be made without departing from the scope of protection as defined by the appended claims.

### Overview

3D printers create 3D objects by using additive processes during which an object is created by laying down successive layers of material until the entire object is created. Each of these layers can be seen as a thinly sliced horizontal cross-section of the final object.

Additive 3D printers are simplest, lowest cost machines for casual home users as well as for professional users. However, available 3D printers utilize extruders that in operation resemble hot glue guns. For example, a stepper motor pushes thermoplastic material into a hot extruder (or head) with resistive heater and thermistor feedback. Head temperature and speed of material are balanced to get acceptable lines of printing. For fine printing a smaller nozzle can be used to make smaller steps that use more fill passes. As an example, printing a small (5mm x 5mm x 50mm) rectangular bar requires a large number of passes. As a result, 3D printers continue to suffer from being slow and inefficient.

In some embodiments, an improved 3D printer system has an omnidirectional, rotatable extruder and is controlled by controller implementing a computer generated model (for example, represented in G-code). During operation, the head is rotated to accurately trace a path along which the material is deposited thereby reducing the number of passes needed to generate a 3D object. In some embodiments, the extruder additionally or alternatively includes a variable-size opening configured to deposit a controlled bead of material in order to reduce the number of passes needed to generate a 3D object.

### System Overview

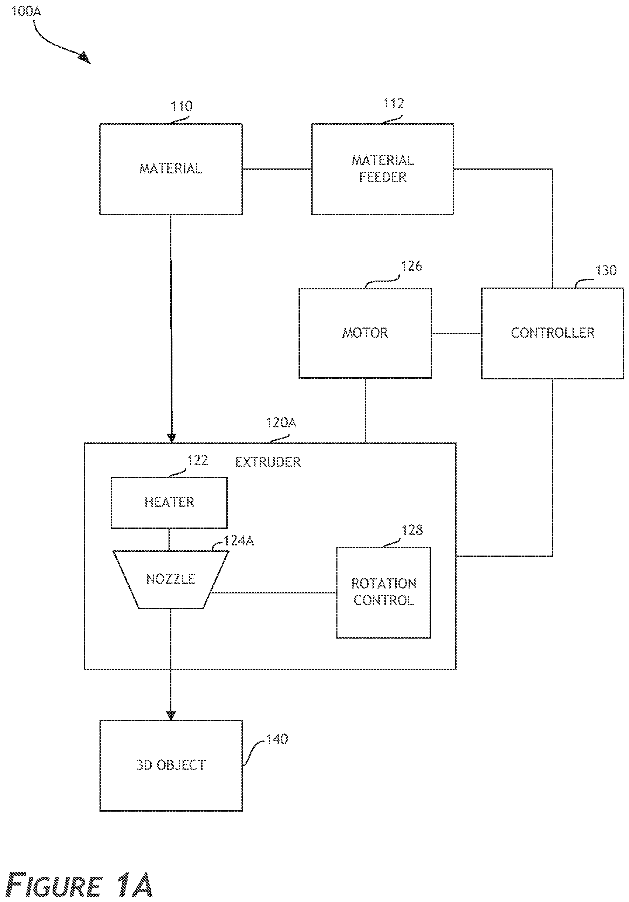

Fig. 1A illustrates a 3D printing system 100A according to one embodiment of the invention. System 100A includes a material feeder 112 that controls the feed rate of material 110. Material feeder 112 can be a stepper motor or any other suitable actuator. Material 110 can be thermoplastic, metal wire, ceramic, chocolate, and the like depending on the application. Material 110 can be fed from a coil through a moving, heated extruder 120A, which includes a heater 122, orifice or nozzle 124A with a tip, and rotation control 128. The tip of the nozzle 124A includes an opening or orifice from which the material 110 is deposited. Molten material heated by the heater 122 is discharged or forced out of the opening of the nozzle 124A and is deposited to form a 3D object 140, for example, layer by layer. Extruder 120A, including the nozzle 124A, is moved in three dimensions by a motor 126. Extruder 120A can be moved in layers, moving in two dimensions to deposit one horizontal slice or plane at a time, before moving upwards to begin a new slice. Speed of the movement can also be controlled to form a substantially interrupted plane without stringing or dribbling of the material 110 between sections. In one embodiment, multiple extruders 120A can be used. For example, the system 100A can include the extruder 120A for depositing the material and another extruder for depositing a support structure for the material. The support structure can be water soluble so that it can be removed from the final object.

In one embodiment, the extruder 120A includes a rotation control 128 configured to rotate the extruder 120A. For example, the tip of the nozzle 124A can be rotated so as to control the deposit of the material 110. In one embodiment, only the nozzle of the extruder is configured to be rotated, not the entire extruder. Rotation control 128 can include a motor connected to a belt, gear driver, or the like for rotating the extruder 120A.

In one embodiment, controller 130 controls one or more of the material feeder 112, the extruder 120A, and the motor 126. For example, the controller 130 controls the rate with which the material feeder 112 feeds the material 110 into the extruder. As another example, the controller 130 controls the motor 126 of the extruder and the rotation control 128 to move the nozzle 124A to deposit the material 110 along a plurality of paths. Controller 130, which can be a general purpose or special purpose controller, can be connected to memory (not shown) for storing various parameters or instructions configured to operate the system 100A. As will be explained below, the parameters can include a computer model for generating the 3D object 140.

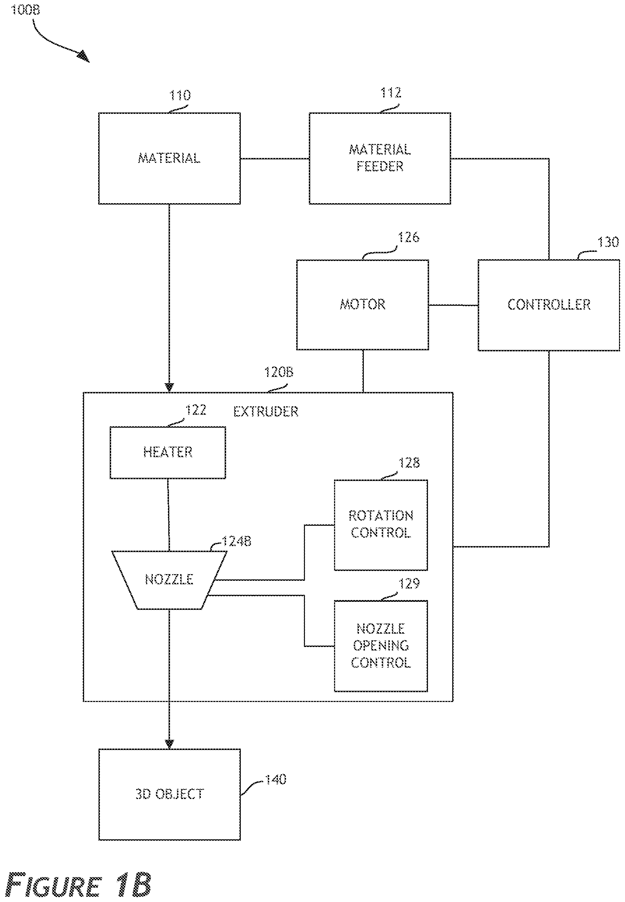

Fig. 1B illustrates a 3D printing system 100B according to another embodiment of the invention. While system 100B is similar to the system 100A illustrated in Fig. 1A, an extruder 120B includes a nozzle 124B having a variable-size opening. In one embodiment, the size of the opening, such as the width of the nozzle 124B, is varied to control the deposit of the material 110. For example, the nozzle opening can be a non-circular opening, which can be configured to deposit a wide but controlled bead of material in order to reduce passes for the print. As another example, the opening can be of any suitable shape or combination of shapes. Extruder 120B includes nozzle opening control 129 configured to control the size of the opening. In one embodiment, nozzle opening control 129 is an actuator, such as a motor, configured to vary the size of the opening. Nozzle opening control 129 can be controlled by the controller 130.

Additional details of the printing system are disclosed in co-pending Patent Publication No. US 2017/0182701, filed on December 29, 2015, titled "EXTRUDER FOR THREE-DIMENSIONAL ADDITIVE PRINTER" and co-pending Patent Publication No. US 2017/0182709, filed on December 29, 2015, titled "DUAL HEAD EXTRUDER FOR THREE-DIMENSIONAL ADDITIVE PRINTER".

### Rotation and Nozzle Opening Control

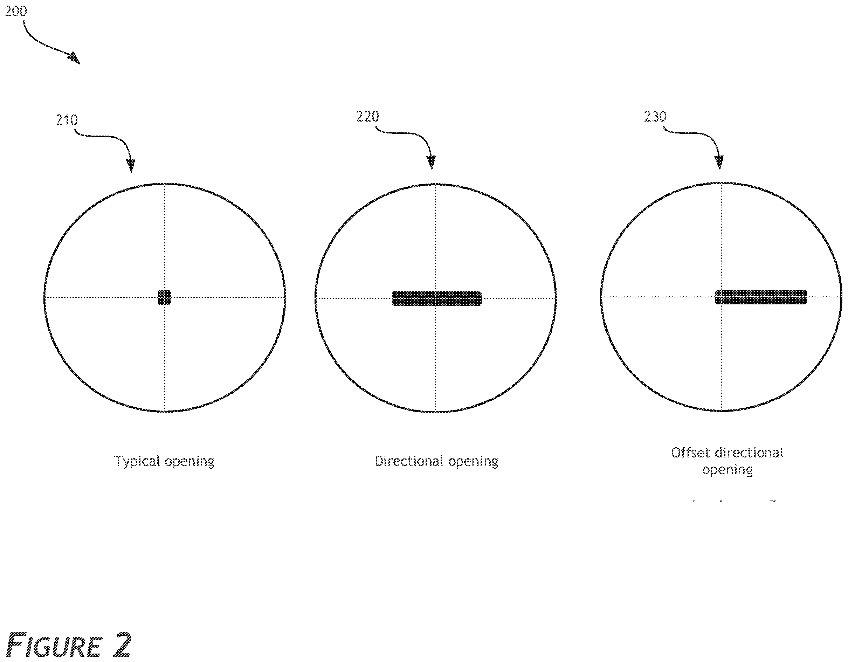

Fig. 2 illustrates extruder tips 200 according to some embodiments of the invention. In 210, an opening of a typical extruder nozzle is illustrated. As can be seen, small amounts of the material can be deposited from the narrow opening illustrated in 210. Improved openings are illustrated in 220 and 230, which can correspond to the opening of the extruder 120A or 120B. Because these openings are wider than the opening illustrated in 210, more material can be deposited. The opening illustrated in 230 is offset from the center, which can provide for increased control during deposit of the material 110. In some embodiments, alternative openings can be used, such as an opening positioned in the diagonal direction.

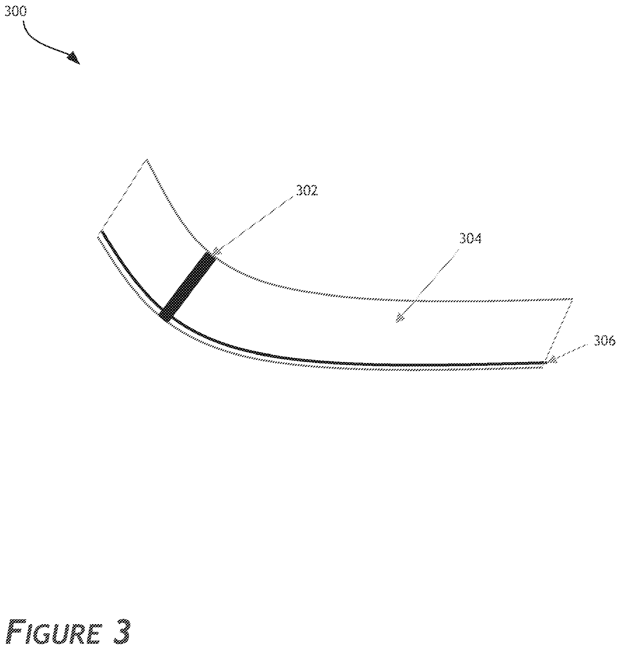

Fig. 3 is a diagram 300 of an extruder depositing material according to one embodiment of the invention. Illustrated path 306 is a desired path traced by the extruder, such as extruder 120A or 120B. The material is deposited along area 304, which represents part of an object, such as the object 140. As is illustrated, the area 304 is wider than the nozzle opening 210 illustrated in Fig. 2, and multiple passes would need to be made by such extruder in order to deposit the material in the area 304. In contrast, as is illustrated by 302, a wider nozzle opening can deposit the material along the entire area 304 in a single pass. The wider nozzle opening 302 can correspond to the opening 220 or 230 illustrated in Fig. 2. As is illustrated in Fig. 3, the path 306 is curved. As is explained below, the nozzle can be rotated in order to trace the path and deposit the material accurately and efficiently.

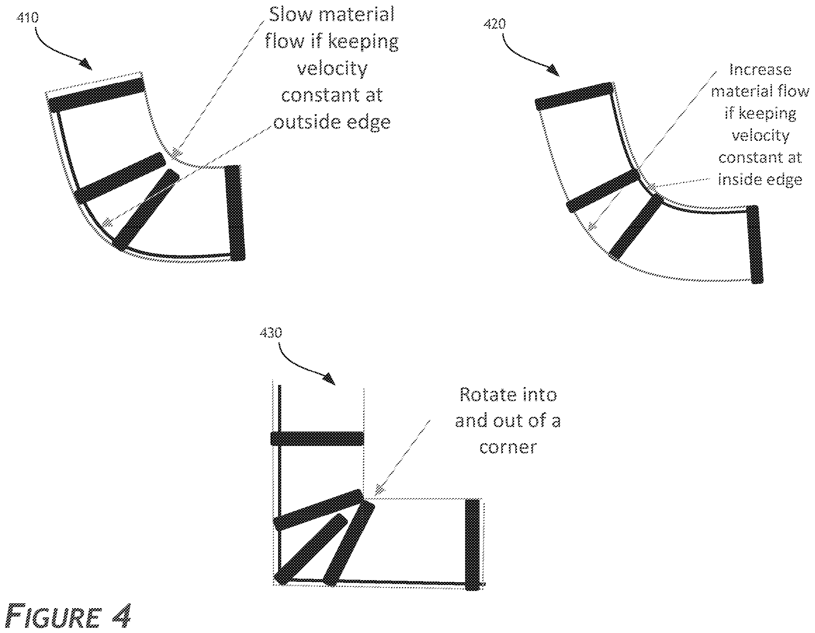

Fig. 4 is a diagram of an extruder, such as the extruder 120A or 120B, depositing material along paths that include corners according to some embodiments of the invention. Path 410 illustrates the nozzle of the extruder tracing a corner along the outside edge at a substantially constant velocity according to one embodiment. Along with the nozzle being rotated to trace the curved path, the rate of material flow is decreased in order to not overfill or deposit excessive amount of the material (which can result in one or more blobs of material). If a rate of material flow is kept constant, excessive amount of the material may be deposited in the areas adjacent to the inner edge of the corner illustrated in 410 because the inner radius of the corner is smaller than the outer radius of the corner and, consequently, areas adjacent to the inner edge are smaller than those adjacent to the outer edge. In arrangements not in accordance with the invention, rather than adjusting the rate of flow of the material, speed of the extruder nozzle is adjusted when tracing an edge. For example, the speed of the extruder nozzle can be increased when tracing the corner illustrated in 410 so that less material is deposited.

Path 420 illustrates the nozzle of the extruder tracing a corner along the inside edge at a substantially constant velocity according to another embodiment. Along with the nozzle being rotated to trace the curved path, the rate of material flow is increased in order to not underfill or deposit insufficient amount of the material. If the rate of material flow is kept constant, insufficient amount of material may be deposited in the areas adjacent to the outer edge of the corner illustrated in 420 because the outer radius of the corner is larger or longer than the inner radius of the corner and, consequently, areas adjacent to the outer edge are larger than those adjacent to the inner edge. In arrangements not in accordance with the invention, rather than adjusting the rate of flow of the material, speed of the extruder nozzle is adjusted when tracing an edge. For example, the speed of the extruder nozzle can be decreased when tracing the corner illustrated in 420 so that more material is deposited.

Path 430 illustrates the nozzle of the extruder tracing a corner according to another embodiment. The illustrated corner is straight, and the extruder nozzle can be rotated into the corner when tracing the corner along the bottom path (with the nozzle moving left). For example, the nozzle can be rotated clockwise. When coming out of the corner in the upward direction, the extruder nozzle can continue being rotated clockwise. Due to rotation, the direction of the nozzle opening is adjusted from vertical (along the bottom part of the path) to horizontal (along the top part of the path).

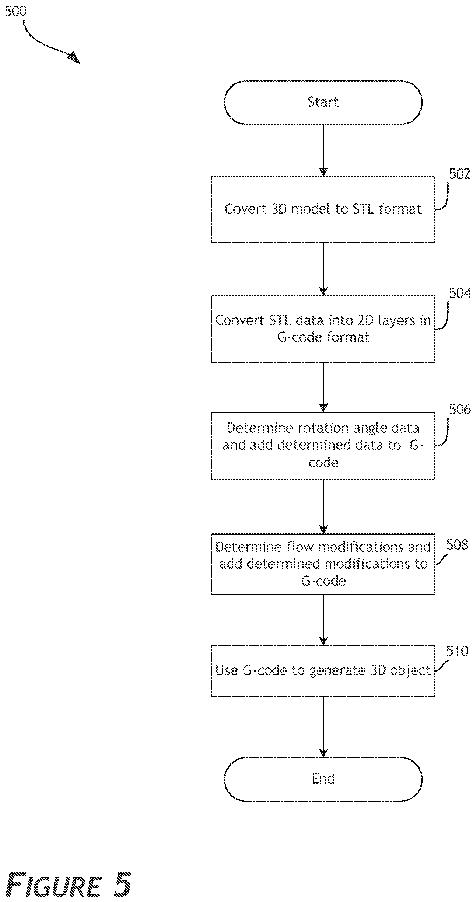

Fig. 5 is a flow diagram illustrating a process 500 of generating a 3D object according to one embodiment of the invention. Process 500 can be implemented by a printing system, such as the system 100A. In one embodiment, the process 500 can be implemented by a controller, such as the controller 130. Process 500 can be referred to as computer-aided manufacturing (CAM) package. Process 500 begins in block 502, in which a 3D model is converted into StereoLithography (STL) format. The 3D model can be a computer model generated by a modeling tool, such as SolidWorks, AutoCAD, and the like. STL format can approximate the surfaces of a solid model using triangles. For example, STL data can describe raw, unstructured triangulated surface by the unit normal and vertices of the triangles using a 3D Cartesian coordinate system. The 3D model can be input into the system 100A, for example, from external memory drive, using a network, and the like.

In block 504, the process 500 converts STL data into a plurality of two-dimensional (2D) layers, which can be represented using G-code. A 2D layer of the plurality of 2D layers can include one or more paths along which the material is to be deposited. During operation, as material is deposited in one 2D layer, the extruder can move to the next 2D layer such that a 3D object is completed layer by layer.

In one embodiment, G-code can be used to direct an extruder, such as the extruder 120A or 120B, to generate a 3D object. G-code is a numerical control programming language, which can be used to generate instructions to control a machine tool. The instructions can direct the extruder on where to move, how fast to move, along what path to move and deposit the material, and the like. In one embodiment, G-code instructions utilize the Cartesian coordinate system in which a position in space is specified along X axis, Y axis, and Z axis. G-code code can also include instructions for feeding the material into the extruder, specifying the extruder temperature, specifying print bed temperature (when heated bed, mats, and the like are used for keeping the extruded material warm and thereby preventing wrapping), and the like. In case multiple extruders are used, instructions for feeding the material, specifying the extruder temperature, and the like can include multiple instructions associated with multiple extruders.

In one embodiment, block 504 can use a tool called Slic3r, which converts a 3D model into printing instructions for a 3D printing system. Slic3r cuts the 3D model into horizontal slices or layers, generates toolpaths to fill the layers, and calculates the amount of material to be extruded.

In block 506, the process 500 determines rotation angle data and adds rotation instructions to the G-code. In one embodiment, rotation or R axis for rotating the extruder is added to the X, Y, and Z axis. R axis can be specified in radians or degrees. For example, when the path includes one or more corners, the nozzle of the extruder can be rotated into and out of the corner in order to deposit the material accurately and efficiently. In one embodiment, miscellaneous codes (or M-codes) of the G-code instruction set can be used to include rotation angles for the extruder. In block 508, the process determines flow modifications and adds or modifies G-code instructions with this information. In one embodiment, when the path includes one or more corners, the rate of flow of the material can be adjusted in order to deposit the material accurately and efficiently. In block 510, the generated G-code is used to generate a 3D object, such as the object 140. For example, fill instructions included in the G-code generated in block 504 can be recomputed, such as recomputed recursively, based on the rotation angle data and flow modifications.

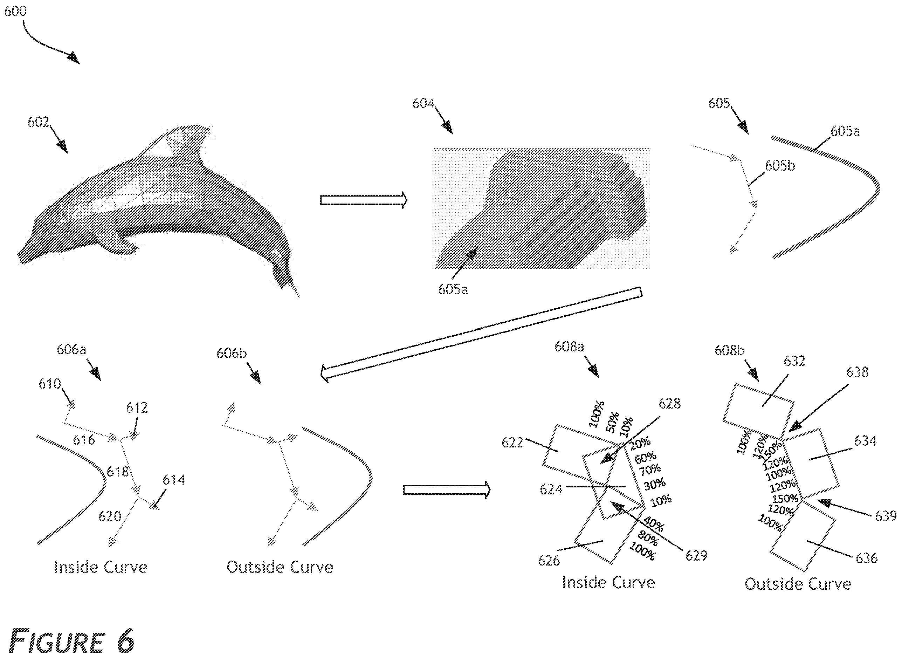

Fig. 6 is a diagram 600 illustrating generation of a 3D object according to one embodiment of the invention. The 3D object can be a representation of a dolphin, and can be generated by the system 100A executing the process 500. Illustration 602 can be a computer generated model of the dolphin. For example, illustration 602 can correspond to STL data, which describes the triangulated surface of the dolphin. STL data can include a set of triangles describing the surface of the 3D object. Illustration 604 depicts a plurality of 2D layers formed to represent a fin of the dolphin. The plurality of 2D layers may have been formed by the controller 130 executing G-code instructions generated in block 508 of the process 500.

Illustration 605 depicts a curve 605a from a 2D layer from a plurality of 2D layers forming the fin. The curve 605a is also illustrated in 604. Also illustrated in 605 is set of vector segments 605b associated with the curve 605a. For example, the set of vector segments 605b can approximate the curve 605a. As is illustrated in 606a, the set of vector segments 605b includes three segments 616, 618, and 602. In one embodiment, the set of vector segments 605b can be determined using spline interpolation, which can produce vector approximation having a high degree of smoothness. In one embodiment, during operation, the extruder can deposit material along a path corresponding to the curve 605a by using the inside or the outside of the curve as a reference point. The illustrated set of vector segments 605b can correspond to the inside or the outside path associated with the curve 605a. The inside and outside paths are illustrated in 606a and 606b respectively. In one embodiment, another part of a curved path, such as a centerline between the inside and outside edges, can be used as a reference point for depositing the material.

To determine rotation angle data, in one embodiment, perpendicular or normal vectors can be computed. For example, this computation be performed in block 506 of the process 500. As is illustrated in 606a, normal vectors, such as 610, 612, and 614, are computed for the sets vector segments. In one embodiment, depending on whether the reference point is the inside or outside of the curve 605a, one set of vectors 606a or 606b is generated and normal vectors corresponding to this set of vectors are computed. Rotation angles can be determined utilizing the computed normal vectors.

For example, suppose that prior to depositing the material along the path segment corresponding to the vector slice or segment 616 (in 606a), the extruder has been depositing the material along a horizontal path segment (not shown) and, hence, the nozzle of the extruder was not rotated. Now suppose that the extruder is transitioning to the segment 616. Using the computed normal vector 610, which can correspond to the angle between the segment 616 and the horizontal axis (X-axis), the rotation angle of the nozzle can be determined and the nozzle can be rotated by the determined angle. This rotation angle can be, for example, 60 degrees (or π/3 radians) from the horizontal axis. When the extruder has deposited the material along the segment 616 and is about to transition to the segment 618, the computed normal vector 612 can be used to determine the rotation angle. For example, suppose that the normal vector 612 indicates that the segment 618 is 30 degrees (or π/6 radians) from the horizontal axis. As the nozzle has already been rotated by 60 degrees to deposit the material along the segment 616, the nozzle can be rotated by -30 degrees to deposit the material along the segment 618. When the extruder has deposited the material along the segment 618 and is about to transition to the segment 620, the computed normal vector 614 can be used to determine the rotation angle. For example, suppose that the normal vector 614 indicates that the segment 620 is -45 degrees (or 7π/8 radians) degrees from the horizontal axis. As the nozzle has already been rotated by 30 degrees to deposit the material along the segment 616, the nozzle can be rotated by -75 degrees to deposit the material along the segment 620. In one embodiment, similar approach can be used to determine rotation angles for the vector segments illustrated in 608b.

In one embodiment, flow modifications can be determined as is illustrated in 608a and 608b for the inside and outside paths respectively. For example, these determinations can be performed in block 508 of the process 500. The rate of flow can be increased on inside corners that increase the speed of tracing the outer radius, and the rate of flow can be decreased on outside corners that decrease the speed of tracing the inner radius. As is illustrated in 608a, the rate of flow of the material is decreased when the extruder traces the path 606a associated with the inside of the curve 605a. The rate of material flow is decreased in order to not overfill or deposit excessive amount of the material. As is illustrated in 608b, the rate of flow of the material is increased when the extruder traces the path 606b associated with the outside of the curve 605a. The rate of material flow is increased in order to not underfill or deposit insufficient amount of the material.

In one embodiment, flow modifications can be computed as follows. For example, in block 504 the process 500 can determine the outside edge and generate material fill patterns using specified density, which can be set by a user. This generated rate of flow can be adjusted by taking into account areas of overlap when using the inside of the curve as the reference point or areas of void when using the outside of the curve as the reference point. As is illustrated in 608a, three areas 622, 624, and 626 associated with the segments 616, 618, and 620 can be determined by taking into account the width of the material segment deposited by the nozzle. Areas 628 and 629 illustrate the overlap between the areas 622 and 624 and 624 and 626 respectively. Increase in the overlap can correspond to a decrease in the rate of flow in order to prevent overfill in the overlap. For example, suppose that the nozzle traces the segments illustrated in 608a from top to bottom. At the top, the rate of flow can be set to 100% as the path is relatively straight. As the bend in the curve is approached and the nozzle is rotated into the curve, the rate of flow is decreased to 50% and then to 10% to account for the increase in the overlap 628 between the areas 622 and 624. The rate of flow is then increased from 10% to 20%, 60%, and 70% as the tip of the curve is being traced. Because the tip of the curve is relatively sharp, the overlap 628 between the areas 622 and 624 decreases, which causes an increase in the rate of flow. Once the tip of the curve has been traced, the rate of flow is decreased to 30% and then to 10% due to the overlap 629 between the areas 624 and 626. As the nozzle is rotated out of the curve, the rate of the flow is increased to 40%, 80%, and 100%. In one embodiment, flow modification can be computed based on the radius of the curve, such as the curve 605a.

With reference to 608b, in one embodiment, flow modifications when outside of the curve is used as the reference point are computed as follows. As is illustrated in 608b, three areas 632, 634, and 636 associated with the vector segments illustrated in 606b can be determined by taking into account the width of the material segment deposited by the nozzle. Areas 638 and 639 illustrate the void between the areas 632 and 634 and 634 and 636 respectively. Rate of flow of the material should be increased in order to prevent underfill in the area of the void. For example, suppose that the nozzle traces the segments illustrated in 608b from top to bottom. At the top, the rate of flow can be set to 100% as the path is relatively straight. As the bend in the curve is approached and the nozzle is rotated into the curve, the rate of flow is increased to 120% and then to 150% to account for the increasing void in the area 638. The rate of flow is then decreased from 150% to 120% and 100% as the tip (or inflection point) of the curve is being traced. Because the tip of the curve is relatively sharp, the void between the areas 632 and 634 decreases, which causes a decrease in the rate of flow. Once the tip of the curve has been traced, the rate of flow is increased to 120% and then to 150% due to the void 639 between the areas 634 and 636. As the nozzle is rotated out of the curve, the rate of the flow is decreased to 120% and then 100%.

In one embodiment, G-code can be used to control the system to generate the 3D object. For example, this can be performed by the process 500 in block 510. G-code can include vector segments for moving the extruder, such as the segments 616, 618, and 620, which can be specified by (x, y) coordinates of the starting and ending points. G-code can also include nozzle rotation data and flow modifications.

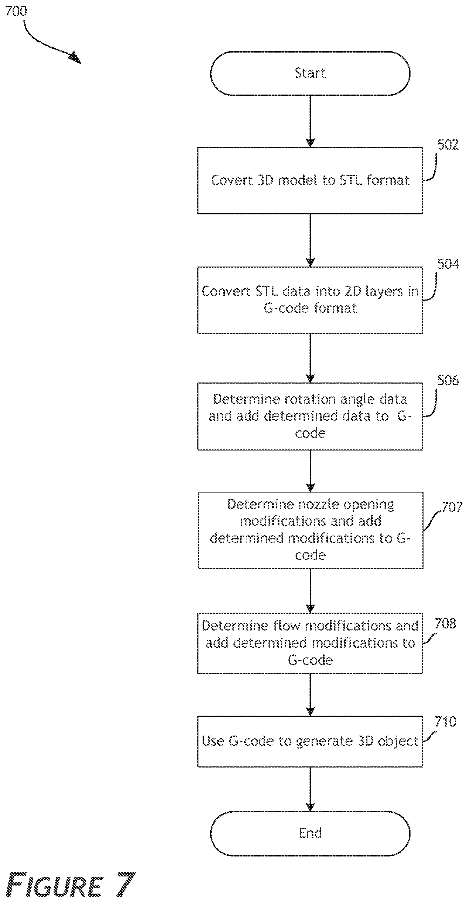

Fig. 7 is a flow diagram illustrating a process 700 of generating a 3D object according to another embodiment of the invention. Process 700 can be implemented by a printing system, such as the system 100B which includes a variable-size opening. In one embodiment, the process 700 can be implemented by a controller, such as the controller 130. As is illustrated, the process 700 is similar to the process 500, and the process 700 includes the same blocks 502, 504, and 506 as the process 500.

In block 707, the process 700 determines nozzle opening modifications and adds these instructions to the G-code. For example, M-codes of the G-code instruction set can be used to include nozzle opening data. Nozzle opening modifications can be specified on a relative scale, such as between 0% (opening completely closed) and 100% (opening fully open). In some embodiments, other absolute or relative scales can be used, such as for example, 0% corresponding to a fully open opening and 100% corresponding to a completely closed opening. Nozzle opening modifications can correspond to varying the width of the opening.

In one embodiment, the process 700 can determine in block 504 the outside edge and generate material fill patterns using specified density, which can be set by a user. This process will be modified for a system having an extruder with a variable-size opening to create awareness of intersections during generation of the 3D object and to adjust the extruder opening size to prevent unwanted overlap. The process 700 can create break lines for sharp corners and create one or more paths not necessarily present in the G-code in order to deposit a proper fill in the detail areas. These modifications can also be computed during the generation of flow modifications. In one embodiment, the process 700 can include a setting for modifying wall width with the extruder having a variable-size opening in order to make very thin walls for lightness, conservation of material, artistic desires, and the like.

In block 708, the process 700 determines flow modifications and adds or modifies G-code instructions with this information. In one embodiment, the flow is modified based on one or more of printing speed, path shape, extruder temperature, extruder opening, and general expected material feed volume. For events where the extruder is lifted and moved to a different part of the print, such as a different appendage of a 3D object, the opening of the extruder could be closed off or substantially closed off in place of or in addition to the material being pulled back to reduce the risk of depositing fine strings of material across the object. In block 710, the generated G-code is used to generate a 3D object, such as the object 140. For example, fill instructions included in the G-code generated in block 504 can be recomputed, such as recomputed recursively, based on the rotation angle data, nozzle opening modifications, and flow modifications.

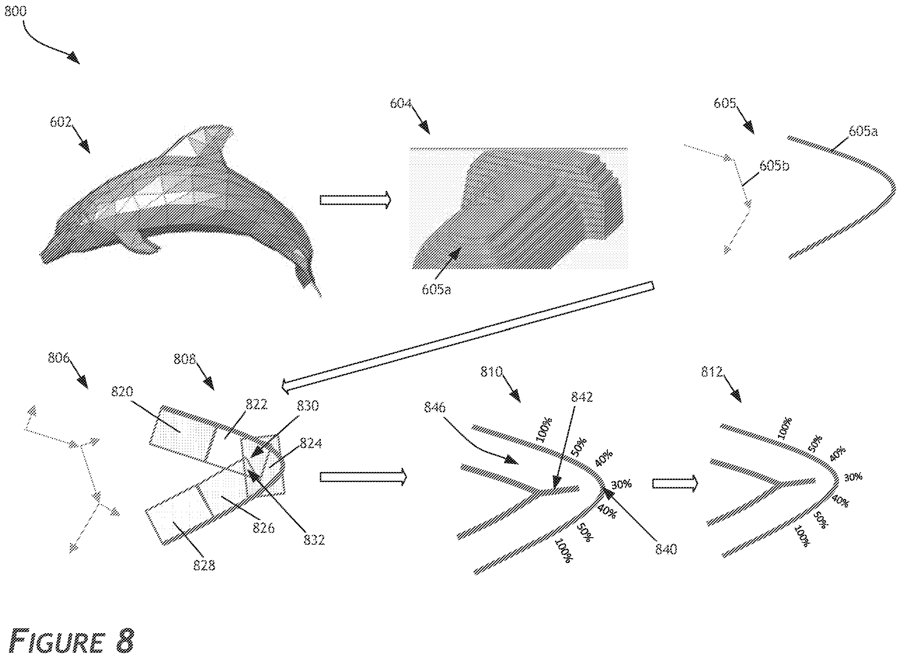

Fig. 8 is a diagram 800 illustrating generation of a 3D object according to another embodiment of the invention. The 3D object can be a representation of a dolphin, and can be generated by the system 100B executing the process 700. Illustrations 602, 604, and 605 in Fig. 8 are the same as in Fig. 6. Illustrations 806 and 808 depict, among other things, determination of rotation angle data and are similar to illustrations 606a, 606b, 608a, and 608b in Fig. 6 and the accompanying description.

In one embodiment, nozzle opening modifications are determined as follows, which can be performed by the process 700 in block 707. With reference to the illustration 808, segments of the path, such as vector segments explained above in connection with Fig. 6, can be determined and areas associated with the segments can be calculated, for example by taking into account the width of the material segment deposited by the nozzle. Illustration 808 corresponds to the path 806 determined when using the inside of the curve as the reference point. Path 806 can be the same as the path 606a in Fig. 6. The determined areas associated with the segments of the path are illustrated as areas 820, 822, 824, 826, and 828.

Next, overlapping areas between the areas 820 through 828 can be determined. For example, areas 830 and 832 are some of the overlapping areas in the illustration 808. Nozzle opening can then be computed so as to minimize overfill of the material in the overlapping areas. In one embodiment, one or more inflection points of the curved path can be identified. An inflection point can correspond to a location where the sign of the curvature of concavity changes and can be determined by identifying locations where the second derivative becomes zero. Because inflection points are associated with change in curvature, they are likely to be associated with sharp changes in the geometry of the object and, hence, areas with large overlap. It is advantageous to modify, such as reduce, the size of the opening at and near inflection points in order to reduce overfill.

In one embodiment, a bisector can be computed at each inflection point. The determined bisector can divide the angle at the inflection point into two equal angles. The determined bisector can be added as part of the path along with the material will be deposited, which will thereby cause the size of the opening to be reduced and create one flat object. After one or more bisectors are added to the path, opening modifications can be determined. For example, as is illustrated in 810, the curved path has an inflection point 840 at which a bisector 842 is added. As the extruder deposits the material along the path 846 between the interior and exterior curves, addition of the bisector 842 significantly narrows the width of the path for depositing the material. Accordingly, the size of the opening is reduced, which minimizes overfill. In one embodiment, the bisector 842 serves as a virtual line or wall that, while is not present in the G-code corresponding to the model, helps with accurately and efficiently generating the 3D object. In one embodiment, the length of the bisector 842 is determined based on the computed overlapping areas. Longer bisector can be generated when there is more overlap, and shorter bisector can be generated when there is less overlap.

Continuing with the example illustrated in 810, suppose that the extruder deposits the material from the top along the path 846. The size of the opening, such as the width, can be set to 100% at relatively flat portion of the path where there is no overlap (see area 820 and top part of area 822 in the illustration 808). As the inflection point 840 and the bisector 842 are being approached, the width of the opening is proportionally being reduced from 100% to 50%, 40%, and 30% at and immediately adjacent to the inflection point 840. As the extruder moves past the inflection point 840 into the downward portion of the path 846, the size of the opening is being proportionally increased from 30% to 40%, 50%, and finally to 100% along the relatively flat bottom portion of the path 846.

Illustration 812 depicts determination of flow modifications to further reduce overfill in the areas of overlap and underfill in the areas of void. Flow modifications can be performed by the process 700 in block 708. In one embodiment, flow modifications can be coordinated (or can match) the opening modifications illustrated in 810. One or more flow modifications are determined as explained above in connection with the illustrations 608a and 608b in Fig. 6.

In one embodiment, G-code can be used to control the system to generate the 3D object. For example, this can be performed by the process 700 in block 710. G-code can include vector segments for moving the extruder, which can be specified by (x, y) coordinates of the starting and ending points. G-code can also

### Conclusion

In some embodiments, a printing system includes an omnidirectional extruder controller by a controller executing G-code. The extruder can include a rotating nozzle with a variable-size opening that can be adjusted for fine detail work and sharp corners. The opening can be a non-circular opening configured to deposit wide ribbons of material with fine edge control. The printing system can advantageously enable at least 3-10 times increase in printing speed when compared to existing printing systems. For example, the printing system according to some embodiments can create an outside wall in a single pass compared to three passes needed by existing printing systems. Highly filled structures may benefit from the greatest increase in speed and efficiency. Internal fill structures could be reshaped and sped up with the ability for a larger print. As a result, efficiency and accuracy can be improved.

### Other Variations

In some arrangements not in accordance with the present invention, nozzle opening control can be used without rotation control. For example, the system 100B illustrated in Fig. 1B may not include the rotation control 128. As another example, the process 700 illustrated in Fig. 7 may not include block 506. In some embodiments, representation other one or more of STL or G-code can be used. Those skilled in the art will appreciate that the present disclosure is applicable to fields other than 3D printing. For example, the present disclosure can be applied in computer-aided manufacturing to control one or more machine tools. As another example, the present disclosure can be applied to cutting and noncutting tools, such as forming tools, brushing tools, photoplotting, and the like. In addition, the present disclosure can be applied for controlling measuring instruments.

In some embodiments, the printing system, such as the system 100A or 100B, can be tuned for typical and atypical situations. Once tuned, computations and rules can become default for that particular type of printing system. Additional tuning adjustment can be exposed to advanced users and those experimenting with new materials.

Additional system components can be utilized, and disclosed system components can be combined or omitted. The actual steps taken in the disclosed processes, such as the processes illustrated in Figs. 5 and 7, may differ from those shown in the figures. Depending on the embodiment, certain of the steps described above may be removed, others may be added. Accordingly, the scope of the present disclosure is intended to be defined only by reference to the appended claims.

While certain embodiments have been described, these embodiments have been presented by way of example only, and are not intended to limit the scope of the protection. Indeed, the novel methods and systems described herein may be embodied in a variety of other forms. Furthermore, various omissions, substitutions and changes in the form of the methods and systems described herein may be made without departing from the scope of the appended claims. For example, the various components illustrated in the figures may be implemented as software and/or firmware on a processor, ASIC/FPGA, or dedicated hardware, which can include logic circuitry. The software and/or firmware can be stored on a non-transitory computer readable storage, such as for example in internal or external memory. Also, the features and attributes of the specific embodiments disclosed above may be combined in different ways to form additional embodiments, all of which fall within the scope of the claims. Although the present disclosure provides certain preferred embodiments and applications, other embodiments that are apparent to those of ordinary skill in the art, including embodiments which do not provide all of the features and advantages set forth herein, may also be within the scope of the claims. Accordingly, the scope of protection is intended to be defined only by the appended claims.

## Claims

1. A non-transitory computer readable storage comprising instructions for a printer comprising a controller (130), a material feeder (112), and an extruder (120B) including a nozzle (124B) that, when executed by the controller, cause the controller to perform a method comprising:
receiving a 3D model;
based on the received 3D model, generating printing instructions configured to cause the material feeder and extruder to generate at least a portion of the 3D model, the printing instructions comprising one or more instructions configured to cause the material feeder and the extruder to print a plurality of layers by at least:
rotating a tip of the nozzle of the extruder by a plurality of rotation angles, the tip comprising an opening configured to discharge material (110);
modifying flow of the material when the tip of the nozzle is rotated; and
executing the printing instructions to cause the material feeder and extruder to generate at least the portion of the 3D model; the non-transitory computer readable storage **characterised in that**:
the one or more instructions are further configured to cause the nozzle to be rotated to trace a path along which the material (110) is configured to be deposited, the path comprising a curve having inside and outside edges, and:
the outside edge having a longer radius than the inside edge, and the one or more instructions are further configured to cause a decrease in a rate of flow of the material when the nozzle (124B) is configured to deposit the material while maintaining a substantially constant velocity at the outside edge; or
the inside edge having a smaller radius than the outside edge, and the one or more instructions are further configured to cause an increase in a rate of flow of the material when the nozzle is configured to deposit the material while maintaining a substantially constant velocity at the inside edge.

2. The computer readable storage of claim 1, wherein the one or more instructions are further configured to cause the nozzle (124B) to be rotated around an axis so as to align the tip with a plurality of paths along which the material (110) is configured to be deposited for generating at least the portion of the 3D model, preferably wherein the one or more instructions to print the plurality of layers comprise G-code data.

3. The computer readable storage of any one of claims 1 to 2, wherein a path along which the material (110) is configured to be deposited comprises a corner, and wherein the one or more instructions are further configured to cause a rotation of the tip of the nozzle (124B) to trace the corner, preferably wherein an axis for rotation comprises an R axis including radians or degrees specifying rotation of the nozzle into and out of the corner.

4. The computer readable storage of any one of claims 1 to 3, wherein the one or more instructions are further configured to cause a modification of a size of the opening of the tip of the nozzle based on a plurality of opening adjustments configured to control deposit of the material, preferably wherein the one or more instructions are further configured to cause a modification of flow of the material (110) separately from the modification of the size of the opening of the tip of the nozzle (124B).

5. The computer readable storage of claim 4, wherein the size of the opening comprises a width of the opening, and wherein the one or more instructions are further configured to cause a modification of the width of the opening to control dimensions of an area where the material (110) is deposited, preferably wherein a path along which the material is configured to be deposited comprises a corner, and wherein the one or more instructions are further configured to cause a reduction of the width of the opening when the tip traces the corner.

6. The computer readable storage of any one of claims 4 to 6, wherein the 3D model comprises first and second parts that are not adjacent in a three-dimensional space, and wherein the one or more instructions are further configured to cause a closure of the opening when the nozzle (124B) moves from the first part to the second part.

7. A system for controlling a three-dimensional (3D) printer, the system comprising:
a memory comprising the computer readable storage of any one of claims 1 to 6; and
a controller configured to:
generate the printing instructions configured to cause the material feeder of the 3D printer and the extruder of the 3D printer to generate at least a portion of the 3D model by:
rotating the tip of the nozzle of the extruder; and
modifying flow of the material when the tip of the nozzle is rotated; and
execute the printing instructions to cause the material feeder and the extruder to generate at least the portion of the 3D model.

8. A three-dimensional (3D) printing method for a printer comprising a controller (130), a material feeder (112), and an extruder (120B) including a nozzle (124B), the method comprising:
receiving a 3D model;
based on the received 3D model, generating, by the controller, printing instructions configured to cause the material feeder and extruder to generate at least a portion of the 3D model, the printing instructions comprising one or more instructions configured to cause the material feeder and the extruder to print a plurality of layers by at least:
rotating a tip of the nozzle of the extruder by a plurality of rotation angles, the tip comprising an opening configured to discharge material (110);
modifying flow of the material when the tip of the nozzle is rotated; and
executing, by the controller, the printing instructions to cause the material feeder and extruder to generate at least the portion of the 3D model; the method **characterised in that**:
the one or more instructions are further configured to cause the nozzle to be rotated to trace a path along which the material (110) is configured to be deposited, the path comprising a curve having inside and outside edges, and:
the outside edge having a longer radius than the inside edge, and the one or more instructions are further configured to cause a decrease in a rate of flow of the material when the nozzle (124B) is configured to deposit the material while maintaining a substantially constant velocity at the outside edge; or
the inside edge having a smaller radius than the outside edge, and the one or more instructions are further configured to cause an increase in a rate of flow of the material when the nozzle is configured to deposit the material while maintaining a substantially constant velocity at the inside edge.

9. The method of claim 8, wherein the one or more instructions are configured to cause the nozzle (124B) to be rotated around an axis so as to align the tip with a plurality of paths along which the material (110) is configured to be deposited for generating at least the portion of the 3D model, preferably wherein the one or more instructions to print the plurality of layers comprise G-code data.

10. The method of any one of claims 8 to 9, wherein a path along which the material (110) is configured to be deposited comprises a corner, and wherein the one or more instructions are further configured to cause a rotation of the tip of the nozzle (124B) to trace the corner, preferably wherein an axis for rotation comprises an R axis including radians or degrees specifying rotation of the nozzle into and out of the corner.

11. The method of any one of claims 8 to 10, wherein the one or more instructions are further configured to cause a modification of a size of the opening of the tip of the nozzle based on a plurality of opening adjustments configured to control deposit of the material, preferably wherein the one or more instructions are further configured to cause a modification of flow of the material (110) separately from the modification of the size of the adjustable opening of the tip of the nozzle (124B).

12. The method of claim 11, wherein the size of the opening comprises a width of the opening, and wherein the one or more instructions are further configured to cause a modification of the width of the opening to control dimensions of an area where the material (110) is deposited, wherein a path along which the material is configured to be deposited comprises a corner, and wherein the one or more instructions are further configured to cause a reduction of the width of the opening when the tip traces the corner.

13. The method of claim 11 or 12, wherein the 3D model comprises first and second parts that are not adjacent in a three-dimensional space, and wherein the one or more instructions are further configured to cause a closure of the opening when the nozzle (124B) moves from the first part to the second part.

## Patentansprüche

1. Nichtflüchtiger computerlesbarer Speicher, der Anweisungen für einen Drucker umfasst, der eine Steuereinrichtung (130), eine Materialzufuhr (112) und einen Extruder (120B) umfasst, der eine Düse (124B) beinhaltet, die, wenn sie von der Steuereinrichtung ausgeführt werden, die Steuereinrichtung veranlassen, ein Verfahren auszuführen, das umfasst:
Empfangen eines 3D-Modells;
basierend auf dem empfangenen 3D-Modell, Erzeugen von Druckanweisungen, die dazu konfiguriert sind, die Materialzufuhr und den Extruder zu veranlassen, mindestens einen Abschnitt des 3D-Modells zu erzeugen, wobei die Druckanweisungen eine oder mehrere Anweisungen umfassen, die dazu konfiguriert sind, die Materialzufuhr und den Extruder zu veranlassen, eine Vielzahl von Schichten zu drucken durch mindestens:
Drehen eine Spitze der Düse des Extruders um eine Vielzahl von Drehwinkeln, wobei die Spitze eine Öffnung umfasst, die dazu konfiguriert ist, Material (110) auszugeben;
Ändern des Flusses des Materials, wenn die Spitze der Düse gedreht wird; und
Ausführen der Druckanweisungen, um die Materialzufuhr und den Extruder zu veranlassen, mindestens den Abschnitt des 3D-Modells zu erzeugen; nichtflüchtiger, computerlesbarer Speicher, **dadurch gekennzeichnet, dass**:
die eine oder die mehreren Anweisungen weiter dazu konfiguriert sind, die Düse zu veranlassen, gedreht zu werden, um einen Pfad zu ziehen, entlang dem das Material (110) dazu konfiguriert ist, abgeschieden zu werden, wobei der Pfad eine Krümmung umfasst, die eine Innenseiten- und eine Außenseitenkante aufweist, und:
die Außenseitenkante einen längeren Radius aufweist als die Innenseitenkante, und die eine oder die mehreren Anweisungen weiter dazu konfiguriert sind, eine Verringerung einer Flussrate des Materials zu veranlassen, wenn die Düse (124B) dazu konfiguriert ist, das Material abzuscheiden, während eine im Wesentlichen konstante Geschwindigkeit an der Außenseitenkante aufrechterhalten wird; oder
die Innenseitenkante einen kleineren Radius aufweist als die Außenseitenkante, und die eine oder die mehreren Anweisungen weiter dazu konfiguriert sind, eine Steigerung einer Flussrate des Materials zu veranlassen, wenn die Düse dazu konfiguriert ist, das Material abzuscheiden, während eine im Wesentlichen konstante Geschwindigkeit an der Innenseitenkante aufrechterhalten wird.

2. Computerlesbarer Speicher nach Anspruch 1, wobei die eine oder die mehreren Anweisungen weiter dazu konfiguriert sind, die Düse (124B) zu veranlassen, um eine Achse derart gedreht zu werden, dass die Spitze mit einer Vielzahl von Pfaden ausgerichtet wird, entlang welcher das Material (110) dazu konfiguriert ist, abgeschieden zu werden, um mindestens den Abschnitt des 3D-Modells zu erzeugen, wobei vorzugsweise eine oder mehrere Anweisungen zum Drucken der Vielzahl von Schichten G-Code-Daten umfassen.

3. Computerlesbarer Speicher nach einem der Ansprüche 1 bis 2, wobei ein Pfad, entlang dem das Material (110) dazu konfiguriert ist, abgeschieden zu werden, eine Ecke umfasst, und wobei die eine oder die mehreren Anweisungen weiter dazu konfiguriert sind, eine Drehung der Spitze der Düse (124B) zu veranlassen, um die Ecke zu ziehen, wobei vorzugsweise eine Achse zur Drehung eine R-Achse umfasst, die Radianten oder Grade beinhaltet, die Drehung der Düse in die Ecke und aus ihr heraus spezifizieren.

4. Computerlesbarer Speicher nach einem der Ansprüche 1 bis 3, wobei die eine oder die mehreren Anweisungen weiter dazu konfiguriert sind, eine Änderung einer Größe der Öffnung der Spitze der Düse basierend auf einer Vielzahl von Öffnungseinstellungen zu veranlassen, die dazu konfiguriert sind, die Abscheidung des Materials zu steuern, wobei vorzugsweise die eine oder die mehreren Anweisungen weiter dazu konfiguriert sind, eine Änderung eines Flusses des Materials (110) separat von der Änderung der Größe der Öffnung der Spitze der Düse (124B) zu veranlassen.

5. Computerlesbarer Speicher nach Anspruch 4, wobei die Größe der Öffnung eine Breite der Öffnung umfasst, und wobei die eine oder die mehreren Anweisungen weiter dazu konfiguriert sind, eine Änderung der Breite der Öffnung zu veranlassen, um Maße einer Fläche, wo das Material (110) abgeschieden wird, zu steuern, wobei vorzugsweise ein Pfad, entlang dem das Material dazu konfiguriert ist, abgeschieden zu werden, eine Ecke umfasst, und wobei die eine oder die mehreren Anweisungen weiter dazu konfiguriert sind, eine Verringerung der Breite der Öffnung zu veranlassen, wenn die Spitze die Ecke zieht.

6. Computerlesbarer Speicher nach einem der Ansprüche 4 bis 6, wobei das 3D-Modell einen ersten und einen zweiten Teil umfasst, die in einem dreidimensionalen Raum nicht aneinandergrenzen, und wobei die eine oder die mehreren Anweisungen weiter dazu konfiguriert sind, ein Schließen der Öffnung zu veranlassen, wenn sich die Düse (124B) von dem ersten Teil zu dem zweiten Teil bewegt.

7. System zum Steuern eines dreidimensionalen (3D) Druckers, wobei das System umfasst:
einen Speicher, der die computerlesbare Speicherung nach einem der Ansprüche 1 bis 6 umfasst; und
eine Steuervorrichtung, die konfiguriert ist, um:
die Druckanweisungen zu erzeugen, die dazu konfiguriert sind, die Materialzufuhr des 3D-Druckers und den Extruder des 3D-Druckers zu veranlassen, mindestens einen Abschnitt des 3D-Modells zu erzeugen durch:
Drehen der Spitze der Düse des Extruders; und
Ändern des Flusses des Materials, wenn die Spitze der Düse gedreht wird; und
Ausführen der Druckanweisungen, um die Materialzufuhr und den Extruder zu veranlassen, mindestens den Abschnitt des 3D-Modells zu erzeugen.

8. Dreidimensionales (3D) Druckverfahren für einen Drucker, der eine Steuereinrichtung (130), eine Materialzufuhr (112) und einen Extruder (120B), der eine Düse (124B) beinhaltet, umfasst, wobei das Verfahren umfasst:
Empfangen eines 3D-Modells;
basierend auf dem empfangenen 3D-Modell, Erzeugen durch die Steuereinrichtung von Druckanweisungen, die dazu konfiguriert sind, die Materialzufuhr und den Extruder zu veranlassen, mindestens einen Abschnitt des 3D-Modells zu erzeugen, wobei die Druckanweisungen eine oder mehrere Anweisungen umfassen, die konfiguriert sind, um die Materialzufuhr und den Extruder zu veranlassen, eine Vielzahl von Schichten zu drucken durch mindestens:
Drehen einer Spitze der Düse des Extruders um eine Vielzahl von Drehwinkeln, wobei die Spitze eine Öffnung umfasst, die dazu konfiguriert ist, Material (110) auszugeben;
Ändern des Flusses des Materials, wenn die Spitze der Düse gedreht wird; und
Ausführen durch die Steuereinrichtung der Druckanweisungen, um die Materialzufuhr und den Extruder zu veranlassen, mindestens den Abschnitt des 3D-Modells zu erzeugen, **dadurch gekennzeichnet, dass**:
die eine oder die mehreren Anweisungen weiter dazu konfiguriert sind, die Düse zu veranlassen, gedreht zu werden, um einen Pfad zu ziehen, entlang dem das Material (110) dazu konfiguriert ist, abgeschieden zu werden, wobei der Pfad eine Krümmung umfasst, die eine Innenseiten- und eine Außenseitenkante aufweist, und:
die Außenseitenkante einen längeren Radius aufweist als die Innenseitenkante, und die eine oder die mehreren Anweisungen weiter konfiguriert sind, um eine Verringerung einer Flussrate des Materials zu veranlassen, wenn die Düse (124B) dazu konfiguriert ist, das Material abzuscheiden, während eine im Wesentlichen konstante Geschwindigkeit an der Außenseitenkante aufrechterhalten wird; oder
die Innenseitenkante einen kleineren Radius aufweist als die Außenseitenkante, und die eine oder die mehreren Anweisungen weiter dazu konfiguriert sind, eine Steigerung einer Flussrate des Materials zu veranlassen, wenn die Düse dazu konfiguriert ist, das Material abzuscheiden, während eine im Wesentlichen konstante Geschwindigkeit an der Innenseitenkante aufrechterhalten wird.

9. Verfahren nach Anspruch 8, wobei die eine oder die mehreren Anweisungen dazu konfiguriert sind, die Düse (124B) zu veranlassen, um eine Achse derart gedreht zu werden, dass die Spitze mit einer Vielzahl von Pfaden ausgerichtet wird, entlang welcher das Material (110) dazu konfiguriert ist, abgeschieden zu werden, um mindestens den Abschnitt des 3D-Modells zu erzeugen, wobei vorzugsweise eine oder mehrere Anweisungen zum Drucken der Vielzahl von Schichten G-Code-Daten umfassen.

10. Verfahren nach einem der Ansprüche 8 bis 9, wobei ein Pfad, entlang dem das Material (110) dazu konfiguriert ist, abgeschieden zu werden, eine Ecke umfasst, und wobei die eine oder die mehreren Anweisungen weiter dazu konfiguriert sind, eine Drehung der Spitze der Düse (124B) zu veranlassen, um die Ecke zu ziehen, wobei vorzugsweise eine Achse zur Drehung eine R-Achse umfasst, die Radianten oder Grade beinhaltet, die Drehung der Düse in die Ecke und aus ihr heraus spezifizieren.

11. Verfahren nach einem der Ansprüche 8 bis 10, wobei die eine oder die mehreren Anweisungen weiter dazu konfiguriert sind, eine Änderung einer Größe der Öffnung der Spitze der Düse basierend auf einer Vielzahl von Öffnungseinstellungen zu veranlassen, die dazu konfiguriert sind, die Abscheidung des Materials zu steuern, wobei vorzugsweise die eine oder die mehreren Anweisungen weiter dazu konfiguriert sind, eine Änderung eines Flusses des Materials (110) separat von der Änderung der Größe der Öffnung der Spitze der Düse (124B) zu veranlassen.

12. Verfahren nach Anspruch 11, wobei die Größe der Öffnung eine Breite der Öffnung umfasst, und wobei die eine oder die mehreren Anweisungen weiter dazu konfiguriert sind, eine Änderung der Breite der Öffnung zu veranlassen, um Maße einer Fläche, wo das Material (110) abgeschieden wird, zu steuern, wobei ein Pfad, entlang dem das Material dazu konfiguriert ist, abgeschieden zu werden, eine Ecke umfasst, und wobei die eine oder die mehreren Anweisungen weiter dazu konfiguriert sind, eine Verringerung der Breite der Öffnung zu veranlassen, wenn die Spitze die Ecke zieht.

13. Verfahren nach Anspruch 11 oder 12, wobei das 3D-Modell einen ersten und einen zweiten Teil umfasst, die in einem dreidimensionalen Raum nicht aneinandergrenzen, und wobei die eine oder die mehreren Anweisungen weiter dazu konfiguriert sind, ein Schließen der Öffnung zu veranlassen, wenn sich die Düse (124B) von dem ersten Teil zu dem zweiten Teil bewegt.

## Revendications

1. Dispositif de stockage lisible par ordinateur non transitoire comprenant des instructions pour une imprimante comprenant un dispositif de commande (130), un distributeur de matière (112) et une extrudeuse (120B) incluant une buse (124B) qui, lorsqu'elles sont exécutées par le dispositif de commande, amènent le dispositif de commande à effectuer un procédé comprenant :
la réception d'un modèle 3D ;
sur la base du modèle 3D reçu, la génération d'instructions d'impression configurées pour amener le distributeur de matière et l'extrudeuse à générer au moins une partie du modèle 3D, les instructions d'impression comprenant une ou plusieurs instructions configurées pour amener le distributeur de matière et l'extrudeuse à imprimer une pluralité de couches grâce à au moins :
une rotation d'une pointe de la buse de l'extrudeuse selon une pluralité d'angles de rotation, la pointe comprenant une ouverture configurée pour décharger de la matière (110) ;
une modification de l'écoulement de la matière lorsque la pointe de la buse est tournée ; et
l'exécution des instructions d'impression pour amener le distributeur de matière et l'extrudeuse à générer au moins la partie du modèle 3D, le dispositif de stockage lisible par ordinateur non transitoire étant **caractérisé en ce que** :
les une ou plusieurs instructions sont en outre configurées pour amener la buse à être tournée pour tracer un trajet le long duquel la matière (110) est configurée pour être déposée, le trajet comprenant une courbe ayant des bords intérieur et extérieur, et :
le bord extérieur ayant un rayon plus long que le bord intérieur, et les une ou plusieurs instructions sont en outre configurées pour amener une réduction d'un débit d'écoulement de la matière lorsque la buse (124B) est configurée pour déposer la matière tout en maintenant une vitesse sensiblement constante au niveau du bord extérieur ; ou
le bord intérieur ayant un rayon plus petit que le bord extérieur, et les une ou plusieurs instructions sont en outre configurées pour amener une augmentation d'un débit d'écoulement de la matière lorsque la buse est configurée pour déposer la matière tout en maintenant une vitesse sensiblement constante au niveau du bord intérieur.

2. Dispositif de stockage lisible par ordinateur selon la revendication 1, dans lequel les une ou plusieurs instructions sont en outre configurées pour amener la buse (124B) à être tournée autour d'un axe de sorte à aligner la pointe avec une pluralité de trajets le long desquels la matière (110) est configurée pour être déposée pour générer au moins la partie du modèle 3D, de préférence dans lequel les une ou plusieurs instructions d'imprimer la pluralité de couches comprennent des données de code G.

3. Dispositif de stockage lisible par ordinateur selon l'une quelconque des revendications 1 à 2, dans lequel un trajet le long duquel le matériau (110) est configuré pour être déposé comprend un coin, et dans lequel les une ou plusieurs instructions sont en outre configurées pour amener une rotation de la pointe de la buse (124B) pour tracer le coin, de préférence dans lequel un axe de rotation comprend un axe R incluant des radians ou degrés spécifiant la rotation de la buse à l'intérieur et à l'extérieur du coin.

4. Dispositif de stockage lisible par ordinateur selon l'une quelconque des revendications 1 à 3, dans lequel les une ou plusieurs instructions sont en outre configurées pour amener une modification d'une taille de l'ouverture de la pointe de la buse sur la base d'une pluralité de réglages d'ouverture configurés pour contrôler le dépôt de matière, de préférence dans lequel les une ou plusieurs instructions sont en outre configurées pour amener une modification du débit de la matière (110) séparément de la modification de la taille de l'ouverture de la pointe de la buse (124B).

5. Dispositif de stockage lisible par ordinateur selon la revendication 4, dans lequel la taille de l'ouverture comprend une largeur de l'ouverture, et dans lequel les une ou plusieurs instructions sont en outre configurées pour amener une modification de la largeur de l'ouverture pour contrôler les dimensions d'une zone où la matière (110) est déposée, de préférence dans lequel un trajet le long duquel la matière est configurée pour être déposée comprend un coin, et dans lequel les une ou plusieurs instructions sont en outre configurées pour amener une réduction de la largeur de l'ouverture lorsque la pointe trace le coin.

6. Dispositif de stockage lisible par ordinateur selon l'une quelconque des revendications 4 à 6, dans lequel le modèle 3D comprend des première et seconde parties qui ne sont pas adjacentes dans un espace tridimensionnel, et dans lequel les une ou plusieurs instructions sont en outre configurées pour amener une fermeture de l'ouverture lorsque la buse (124B) se déplace de la première partie à la seconde partie.

7. Système de commande d'une imprimante tridimensionnelle (3D), le système comprenant :
une mémoire comprenant le dispositif de stockage lisible par ordinateur selon l'une quelconque des revendications 1 à 6 ; et
un dispositif de commande configuré pour :
générer les instructions d'impression configurées pour amener le distributeur de matière de l'imprimante 3D et l'extrudeuse de l'imprimante 3D à générer au moins une partie du modèle 3D en :
faisant tourner la pointe de la buse de l'extrudeuse ; et
modifiant l'écoulement de la matière lorsque la pointe de la buse est tournée ; et
exécuter les instructions d'impression pour amener le distributeur de matière et l'extrudeuse à générer au moins la partie du modèle 3D.

8. Procédé d'impression tridimensionnelle (3D) pour une imprimante comprenant un dispositif de commande (130), un distributeur de matière (112) et une extrudeuse (120B) incluant une buse (124B), le procédé comprenant :
la réception d'un modèle 3D ;
sur la base du modèle 3D reçu, la génération, par le dispositif de commande, d'instructions d'impression configurées pour amener le distributeur de matière et l'extrudeuse à générer au moins une partie du modèle 3D, les instructions d'impression comprenant une ou plusieurs instructions configurées pour amener le distributeur de matière et l'extrudeuse à imprimer une pluralité de couches grâce à au moins :
la rotation d'une pointe de la buse de l'extrudeuse selon une pluralité d'angles de rotation, la pointe comprenant une ouverture configurée pour décharger de la matière (110) ;
la modification de l'écoulement de la matière lorsque la pointe de la buse est tournée ; et
l'exécution, par le dispositif de commande, des instructions d'impression pour amener le distributeur de matière et l'extrudeuse à générer au moins la partie du modèle 3D, le procédé étant **caractérisé en ce que** :
les une ou plusieurs instructions sont en outre configurées pour amener la buse à être tournée pour tracer une trajet le long duquel la matière (110) est configurée pour être déposée, le trajet comprenant une courbe ayant des bords intérieur et extérieur, et :
le bord extérieur ayant un rayon plus long que le bord intérieur, et les une ou plusieurs instructions sont en outre configurées pour amener une réduction d'un débit d'écoulement de la matière lorsque la buse (124B) est configuré pour déposer la matière tout en maintenant une vitesse sensiblement constante au niveau du bord extérieur ; ou
le bord intérieur ayant un rayon plus petit que le bord extérieur, et les une ou plusieurs instructions sont en outre configurées pour amener une augmentation d'un débit d'écoulement de la matière lorsque la buse est configuré pour déposer la matière tout en maintenant une vitesse sensiblement constante au niveau du bord intérieur.

9. Procédé selon la revendication 8, dans lequel les une ou plusieurs instructions sont configurées pour amener la buse (124B) à être tournée autour d'un axe de sorte à aligner la pointe avec une pluralité de trajets le long desquels la matière (110) est configurée pour être déposée pour générer au moins la partie du modèle 3D, de préférence dans lequel les une ou plusieurs instructions d'imprimer la pluralité de couches comprennent des données de code G.

10. Procédé selon l'une quelconque des revendications 8 à 9, dans lequel un trajet le long duquel le matériau (110) est configuré pour être déposé comprend un coin, et dans lequel les une ou plusieurs instructions sont en outre configurées pour amener une rotation de la pointe de la buse (124B) pour tracer le coin, de préférence dans lequel un axe de rotation comprend un axe R incluant des radians ou degrés spécifiant la rotation de la buse à l'intérieur et à l'extérieur du coin.

11. Procédé selon l'une quelconque des revendications 8 à 10, dans lequel les une ou plusieurs instructions sont en outre configurées pour amener une modification d'une taille de l'ouverture de la pointe de la buse sur la base d'une pluralité de réglages d'ouverture configurés pour contrôler le dépôt de matière, de préférence dans lequel les une ou plusieurs instructions sont en outre configurées pour amener une modification du débit de la matière (110) séparément de la modification de la taille de l'ouverture de la pointe de la buse (124B).

12. Procédé selon la revendication 11, dans lequel la taille de l'ouverture comprend une largeur de l'ouverture, et dans lequel les une ou plusieurs instructions sont en outre configurées pour amener une modification de la largeur de l'ouverture pour contrôler les dimensions d'une zone où la matière (110) est déposée, de préférence dans lequel un trajet le long duquel la matière est configurée pour être déposée comprend un coin, et dans lequel les une ou plusieurs instructions sont en outre configurées pour amener une réduction de la largeur de l'ouverture lorsque la pointe trace le coin.

13. Procédé selon la revendication 11 ou 12, dans lequel le modèle 3D comprend des première et seconde parties qui ne sont pas adjacentes dans un espace tridimensionnel, et dans lequel les une ou plusieurs instructions sont en outre configurées pour amener une fermeture de l'ouverture lorsque la buse (124B) se déplace de la première partie à la seconde partie.
